# EUROPÄISCHE PATENTSCHRIFT

(11) **EP 3 138 185 B1**
(45) Veröffentlichungstag und Bekanntmachung des Hinweises auf die Patenterteilung: **04.04.2018**
(21) Anmeldenummer: 15719212.1
(22) Anmeldetag: 28.04.2015
(51) Int. Cl.: H02K 15/00

(54) **VERFAHREN ZUM LÖSEN DER ROTORPOLE IN EINER ELEKTRISCHEN MASCHINE**
METHOD FOR DETACHING THE ROTOR POLES IN AN ELECTRIC MACHINE
PROCÉDÉ POUR LIBÉRER LES PÔLES ROTORIQUES SUR UNE MACHINE ÉLECTRIQUE

(30) Priorität: 28.04.2014 DE 102014207915
(43) Veröffentlichungstag der Anmeldung: 08.03.2017
(73) Patentinhaber: Voith Patent GmbH, 89522 Heidenheim (DE)
(72) Erfinder: ALTHOFF, Martin, 89522 Heidenheim (DE); WINTER, Axel Daniel, 73340 Amstetten (DE)
(86) Internationale Anmeldenummer: PCT/EP2015/059129
(87) Internationale Veröffentlichungsnummer: WO 2015/165865

(56) Entgegenhaltungen:
- JP-A- 2013 146 161
- US-A- 4 518 151

## Beschreibung

Die vorliegende Erfindung betrifft ein Verfahren zum Ausbau der Rotorpole in einer großen elektrischen Maschine, wie sie beispielsweise in Wasserkraftwerken zum Einsatz kommt.

Zur Wartung und Pflege oder zur Wiederinstandsetzung oder Modernisierung einer großen elektrischen Maschine kann es notwendig sein, die Rotorpole auszubauen. Um den Aufwand und die Kosten dieser Maßnahme möglichst gering zu halten, werden die Pole in der Regel in axialer Richtung aus der Rotornabe herausgezogen, wobei die Rotornabe in der elektrischen Maschine verbleibt. Gelegentlich kommt es vor, dass der Ausbau der Rotorpole unerwartete Schwierigkeiten bereitet. Die Aufgabe der vorliegenden Erfindung besteht darin, diese Schwierigkeiten in einer Weise zu überwinden, die einerseits keinen Schaden an der elektrischen Maschine verursacht und andererseits möglichst kostengünstig ist.

Die Rotorpole sind gewöhnlich mit Hilfe von Schwalbenschwanz- oder Hammerkopfverbindungen an der Rotornabe befestigt. Im Betrieb unterliegen die Pole der Fliehkraft, die in radialer Richtung wirkt. Die Erfinder haben erkannt, dass die Schwierigkeiten dadurch entstehen, dass sich die Pole derart in der Befestigung verkanten, dass zur Lösung dieser ungewollten Verbindung eine Kraft auf die Pole ausgeübt werden muss, die in negativer radialer Richtung, d.h. zur Rotorachse hin gerichtet sein muss. Erst nachdem die Pole durch die Einwirkung der so gerichteten Kraft, von der ungewollten Verbindung mit der Rotornabe gelöst worden sind, können sie ohne weitere Schwierigkeiten in axialer Richtung herausgezogen werden. Eine solche Kraft kann aber nicht ohne weiteres auf die Pole ausgeübt werden, da im eingebauten Zustand ein Rotorpol nur eingeschränkt zugänglich ist. In der Regel ist nur eine oder beide Stirnseiten des Pols frei zugänglich. Eine Kraft in negativer radialer Richtung kann so zunächst nur an diesen Stellen angreifen. Die Erfahrung zeigt, dass diese Vorgehensweise oftmals nicht ausreicht, um den Pol auf seiner ganzen Länge von der ungewollten Verbindung mit der Nabe zu lösen. Die Erfinder haben erkannt, dass es notwendig ist, die lösende Kraft homogen über die gesamte Länge des Pols aufzubringen.

Die Erfinder haben erkannt, dass die gestellte Aufgabe durch ein Verfahren mit den kennzeichnenden Merkmalen des Anspruches 1 gelöst werden kann. Weitere vorteilhafte Ausgestaltungen der erfinderischen Lösung ergeben sich aus den hiervon abhängigen Unteransprüchen.

Die erfindungsgemäße Lösung wird nachfolgend anhand von Figuren erläutert. Darin ist im Einzelnen folgendes dargestellt:
- Figur 1: eine erfindungsgemäße Vorrichtung in Draufsicht; und
- Figur 2: eine erfindungsgemäße Vorrichtung von vorne; und
- Figur 3: ein erfindungsgemäßes Verfahren

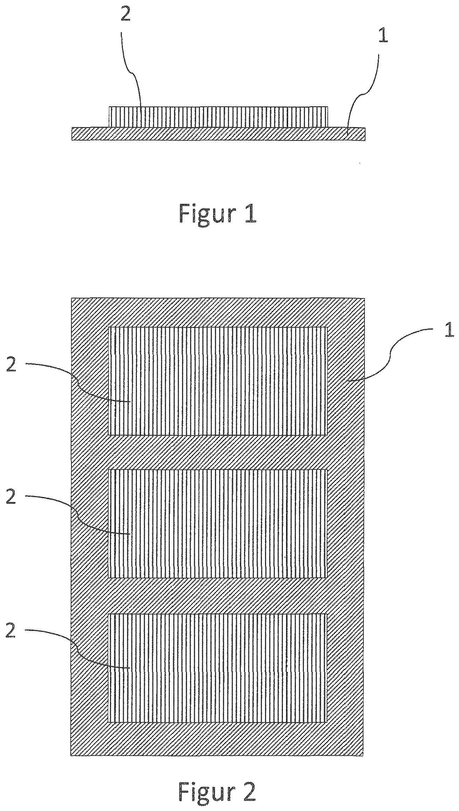

In der Darstellung der Figur 1 ist eine erfindungsgemäße Vorrichtung zum Ausbau der Rotorpole in schematischer Form gezeigt. Dabei ist eine Trägerplatte mit 1 bezeichnet und ein mit Gas zu füllendes Kissen mit 2 bezeichnet. In Figur 2 ist die erfindungsgemäße Vorrichtung von vorne zu sehen. In der gezeigten Anordnung befinden sich 3 mit Gas zu füllende Kissen 2 übereinander auf der Trägerplatte 1. Es kann jedoch je nach Polgeometrie eine beliebige Anzahl von Kissen auf einer Trägerplatte angebracht werden. Die erfindungsgemäße Vorrichtung zum Ausbau der Rotorpole wird dabei folgendermaßen verwendet: Die Trägerplatte wird zusammen mit den daran befestigten Kissen, welche nicht mit Gas befüllt sind, in den Luftspalt zwischen dem Generator-Stator und den Rotorpolen eingebracht. Der Luftspalt ist in der Regel nur wenige Zentimeter breit. Wenn die Kissen mit Gas befüllt werden, dann dehnen sich diese dergestalt aus, dass sie sowohl auf den Stator als auch auf den zu lösenden Rotorpol eine Kraft ausüben. Diese Kräfte steigen mit zunehmendem Gasdruck im Inneren der Kissen proportional an. Die Kraft die auf den Rotorpol wirkt, ist die Kraft, die zum Lösen des Pols benötigt wird. Damit diese Kraft homogen auf die ganze Pollänge verteilt wirken kann, müssen die Kissen entsprechend homogen über die ganze Pollänge verteilt in den Luftspalt eingebracht werden. Dies wird mit Hilfe der Trägerplatte erreicht, auf der die Luftkissen entsprechend verteilt angebracht werden. Die Trägerplatte liefert dabei die strukturelle Festigkeit, die benötigt wird um die Luftkissen im Luftspalt an den gewünschten Ort zu bringen. Es hat sich als zweckmäßig erwiesen, dass die Trägerplatte wenigstens etwa so breit und so hoch ist wie ein zu lösender Rotorpol. Ebenfalls als zweckmäßig hat sich erwiesen, dass die Kissen mit Hilfe von Klettverschlüssen an der Trägerplatte befestigt werden. Eine weitere zweckmäßige und kostengünstige Befestigung der Kissen auf der Trägerplatte kann mit Hilfe von Klebestreifen realisiert werden.

Die Befüllung der Kissen mit unter Druck stehendem Gas geschieht mit Hilfe von Schläuchen. Diese Schläuche sind in den Figuren nicht dargestellt. Als Gas kommt vor allem Druckluft in Frage, die in der Regel leicht verfügbar ist. Es können jedoch auch andere Gase verwendet werden. Es hat sich als zweckmäßig erwiesen den Druck des Gases in den Kissen sukzessive in Stufen zu erhöhen. Damit die Schläuche das Einbringen der Vorrichtung in den Luftspalt nicht unnötig behindern, hat es sich als zweckmäßig erwiesen, dass die Schläuche z.B. mit Klebestreifen an der Trägerplatte befestigt werden.

Die Vorrichtung kann grundsätzlich in zwei verschiedenen Ausrichtungen in den Luftspalt eingeführt werden. In der ersten Ausrichtung weist die Trägerplatte in Richtung Stator, während die Luftkissen in Richtung Rotorpol zu liegen kommen. In der anderen Ausrichtung weist die Trägerplatte in Richtung Rotorpol und die Kissen liegen in Richtung Stator. Im Prinzip können beide Ausrichtungen erfolgreich verwendet werden. Es hat sich jedoch herausgestellt, dass die erste Ausrichtungsvariante (Trägerplatte weist Richtung Stator) besonders zweckmäßig ist, da in dieser Ausrichtung die Trägerplatte den Stator vor einer möglichen Beschädigung schützt. Auf der Statorinnenseite befinden sich die Wicklungsnuten und die darin eingelegten Wicklungsstäbe. Besonders empfindlich ist die Isolierung der Wicklungsstäbe, und ein auf diese ausgeübter Druck könnte zu einer Beschädigung der Isolation und damit zu Kurzschlüssen führen. Wenn die Trägerplatte in Richtung Stator liegt, so stützt sich die Trägerplatte auf die zwischen den Wicklungsnuten liegenden Zähne des Statorblechpakets ab, welche weniger empfindlich sind. Durch die Festigkeit der Trägerplatte geschützt erfahren die in den Nuten liegenden Wicklungsstäbe keinen schädlichen Druck. Wenn dagegen die Kissen auf der Seite des Stators liegen, so würden die Kissen sich aufgrund ihrer leichten Verformbarkeit in die Nuten einstülpen und somit auch auf die darin liegenden Wicklungsstäbe einen schädlichen Druck ausüben. Falls die Nuten mit Verschlussmitteln gesichert sind, die über die Zähne des Statorblechpaketes in Richtung Rotor hinausstehen, so können noch zusätzlich Abstandshalter auf die Zähne aufgebracht werden, so dass sich die Trägerplatte über diese Abstandshalter auf die Zähne abstützt und so nicht auf die Verschlussmittel drücken kann.

Als Material für die Trägerplatte haben sich Faserverstärkte Kunststoffe, z.B. sogenannte Hartgewebeplatten als besonders günstig erwiesen, da diese eine hohe Festigkeit bei geringer Dicke aufweisen. Außerdem gewährleistet die Verwendung eines Kunststoffes, dass eine Beschädigung des Stators durch Stöße beim Einbringen der Vorrichtung in den Luftspalt vermieden werden kann. Dies ergibt sich aus der geringen Härte des Kunststoffes im Vergleich mit den Statorblechen.

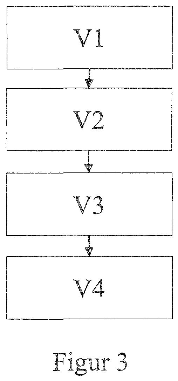

In Figur 3 ist der Ablauf des erfindungsgemäßen Verfahrens schematisch dargestellt. Im mit V1 bezeichneten Verfahrensschritt wird wenigstens eine erfindungsgemäße Vorrichtung in den Luftspalt zwischen Stator und einem zu lösenden Rotorpol eingebracht. Im mit V2 bezeichneten Verfahrensschritt werden die Kissen der erfindungsgemäßen Vorrichtung mit unter Druck stehendem Gas gefüllt, wobei der Druck des Gases sukzessive erhöht wird, solange bis sich der zu lösende Rotorpol von der Rotornabe gelöst hat. Im mit V3 bezeichneten Verfahrensschritt wird die erfindungsgemäße Vorrichtung aus dem Luftspalt entfernt und im mit V4 bezeichneten Verfahrensschritt wird der gelöste Pol aus der Nabe gezogen.

Die Schritte V1 bis V4 werden so lange wiederholt, bis alle Pole ausgebaut sind. Genauso gut können nur die Schritte V1 bis V3 so lange wiederholt werden, bis alle Rotorpole gelöst sind, und danach wird der Schritt V4 so oft wieder holt, bis alle Rotorpole ausgebaut sind. Es ist auch denkbar, dass die Schritte V3 und V4 in umgekehrter Reihenfolge ausgeführt werden.

Als besonders zweckmäßig hat sich erwiesen, wenn eine gerade Anzahl von erfindungsgemäßen Vorrichtungen simultan in den Schritten V1, V2 und V3 verwendet werden. Dabei werden immer zwei erfindungsgemäße Vorrichtungen an gegenüberliegenden Polen eingebracht und die zugehörigen Kissen mit unter Druck stehendem Gas gefüllt. Auf diese Weise werden die Kräfte zum Lösen der Pole symmetrisch zur Rotorwelle eingebracht, so dass sich diese Kräfte bezüglich der Rotorwelle aufheben. Dadurch werden die Lager des Rotors geschont.

## Patentansprüche

1. Verfahren zum Lösen der Rotorpole einer großen elektrischen Maschine von der Rotornabe, welche sich im eingebauten Zustand innerhalb des Stators befindet, wobei in einem Verfahrensschritt (V1) wenigstens eine Vorrichtung in den Luftspalt zwischen dem Stator und einem zu lösenden Rotorpol eingebracht wird, wobei die Vorrichtung aus einer Trägerplatte (1) und wenigstens einem an der Trägerplatte befestigten mit Gas füllbaren Kissen (2) besteht, und dass in einem folgenden Verfahrensschritt (V2) die zur Vorrichtung gehörigen Kissen mit unter Druck stehendem Gas gefüllt werden, wobei der Druck so lange sukzessive erhöht wird, bis sich der zu lösende Pol gelöst hat, und dass in einem folgenden Verfahrensschritt (V3) die wenigstens eine Vorrichtung aus dem Luftspalt entfernt wird und dass in einem weiteren Schritt (V4) der gelöste Pol aus der Rotornabe gezogen wird.

2. Verfahren nach Anspruch 1, wobei die Trägerplatte (1) eine Hartgewebeplatte ist.

3. Verfahren nach einem der Ansprüche 1 oder 2, wobei das wenigstens eine mit Gas füllbare Kissen (2) mit Hilfe von Klettverschlüssen oder Klebestreifen an der Trägerplatte (1) befestigt ist.

4. Verfahren nach einem der Ansprüche 1 bis 3, wobei das wenigstens eine Kissen (2) mit Hilfe von einem Schlauch mit Gas befüllt werden kann, wobei der Schlauch an der Trägerplatte (1) befestigt ist.

5. Verfahren nach Anspruch 4, wobei der wenigstens eine Schlauch zum Füllen des wenigstens einen Kissens (2) mit Hilfe von Klebestreifen an der Trägerplatte (1) befestigt ist.

6. Verfahren nach Anspruch 1, wobei als Gas Druckluft verwendet wird.

7. Verfahren nach einem der Ansprüche 1 oder 6, wobei in den Verfahrensschritten V1, V2 und V3 jeweils eine gerade Anzahl von Vorrichtungen simultan verwendet wird, wobei jeweils zwei der Vorrichtungen an gegenüberliegenden Rotorpolen eingesetzt werden.

## Claims

1. Method for releasing the rotor poles of a large electrical machine from the rotor hub, which in the fitted state is located within the stator, wherein, in one method step (V1), at least one device is introduced into the air gap between the stator and a rotor pole to be released, wherein the device consists of a carrier plate (1) and at least one cushion (2) that can be filled with gas and is attached to the carrier plate, and in that, in a following method step (V2), the cushions belonging to the device are filled with gas under pressure, the pressure being successively increased until the pole to be released has come away, and in that, in a following method step (V3), the at least one device is removed from the air gap and in that, in a further step (V4), the released pole is pulled out of the rotor hub.

2. Method according to Claim 1, wherein the carrier plate (1) is a fabric-base laminate panel.

3. Method according to either of Claims 1 and 2, wherein the at least one cushion (2) that can be filled with gas is attached to the carrier plate (1) with the aid of hook-and-loop fasteners or adhesive strips.

4. Method according to one of Claims 1 to 3, wherein the at least one cushion (2) can be filled with gas with the aid of a tube, the tube being attached to the carrier plate (1).

5. Method according to Claim 4, wherein the at least one tube for filling the at least one cushion (2) is attached to the carrier plate (1) with the aid of adhesive strips.

6. Method according to Claim 1, wherein compressed air is used as the gas.

7. Method according to either of Claims 1 and 6, wherein in method steps V1, V2 and V3 an even number of devices are respectively used simultaneously, two of the devices in each case being used at opposite rotor poles.

## Revendications

1. Procédé pour détacher les pôles de rotor d'une grande machine électrique du moyen de rotor, lequel se trouve à l'intérieur du stator à l'état monté, au moins un dispositif étant introduit dans l'entrefer entre le stator et un pôle de rotor à détacher dans une étape de procédé (V1), le dispositif étant constitué d'une plaque porteuse (1) et d'au moins un coussin (2) qui peut être rempli de gaz et fixé à la plaque porteuse, et en ce que dans une étape de procédé (V2) suivante, les coussins qui font partie du dispositif étant remplis d'un gaz qui est sous pression, la pression étant augmentée successivement jusqu'à ce que le pôle à détacher se soit détaché, et en ce que dans une étape de procédé (V3) suivante, l'au moins un dispositif étant sorti de l'entrefer, et dans une étape de procédé (V4) suivante, le pôle détaché étant retiré du moyen de rotor.

2. Procédé selon la revendication 1, la plaque porteuse (1) étant une plaque en tissu stratifié.

3. Procédé selon l'une des revendications 1 ou 2, l'au moins un coussin (2) qui peut être rempli de gaz étant fixé à la plaque porteuse à l'aide de fermetures autogrippantes ou de bandes adhésives.

4. Procédé selon l'une des revendications 1 à 3, l'au moins un coussin (2) pouvant être rempli de gaz à l'aide d'un tuyau, le tuyau étant fixé à la plaque porteuse (1).

5. Procédé selon la revendication 4, l'au moins un tuyau destiné au remplissage de l'au moins un coussin (2) étant fixé à la plaque porteuse (1) à l'aide de bandes adhésives.

6. Procédé selon la revendication 1, de l'air comprimé étant utilisé en tant que gaz.

7. Procédé selon l'une des revendications 1 à 6, un nombre pair de dispositifs étant respectivement employés simultanément dans les étapes de procédé V1, V2 et V3, deux des dispositifs étant respectivement utilisés sur des pôles de rotor opposés.
